# EUROPÄISCHE PATENTANMELDUNG

(11) **EP 4 775 029 A1**
(43) Veröffentlichungstag der Anmeldung: **15.07.2026**
(21) Anmeldenummer: 25151108.5
(22) Anmeldetag: 10.01.2025
(51) Int. Cl.: A01M 1/22, A01M 1/02

(54) **BORKENKÄFERFALLE**

(71) Anmelder: Hochschule für Angewandte Wissenschaft und Kunst Hildesheim/Holzminden/Göttingen, 31134 Hildesheim (DE)
(72) Erfinder: Rohe, Prof. Dr. Wolfgang, 37120 Bovenden (DE); Viöl, Professor Dr. Wolfgang, 37139 Adelebsen (DE)
(74) Vertreter: REHBERG HÜPPE + PARTNER

(57) **Zusammenfassung**

Eine Borkenkäferfalle (1) weist ein Gehäuse (2) mit Einflugschlitzen (3), eine volatile Lockstoffe in dem Gehäuse (2) freisetzende Anlockeinrichtung, eine am Boden (9) des Gehäuses (2) angeordnete Größenselektionseinrichtung (17) und eine unterhalb der Größenselektionseinrichtung (17) angeordnete Schädigungseinrichtung (19) auf. Die Schädigungseinrichtung (19) umfasst eine Hochspannungselektrode (21), eine in einem freien Abstand (24) zu der Hochspannungselektrode (21) angeordnete Gegenelektrode (23) und eine eine Hochspannung zwischen der Hochspannungselektrode (21) und der Gegenelektrode (23) anlegende Hochspannungsquelle. Dabei ist die Hochspannungselektrode (21) und/oder die Gegenelektrode (23) mit einer dielektrischen Abschirmung (22) versehen. Die Hochspannungsquelle ändert die zwischen der Hochspannungselektrode (21) und der Gegenelektrode (23) anliegende Hochspannung derart schnell, dass zwischen der Hochspannungselektrode (21) und der Gegenelektrode (23) elektrische Entladungen hervorgerufen werden, die durch die dielektrische Abschirmung (22) dielektrisch behindert sind. Durch die elektrischen Entladungen zwischen der Hochspannungselektrode (21) und der Gegenelektrode (23) werden in den Bereich des freien Abstands (24) der Hochspannungselektrode (21) und der Gegenelektrode (21) gelangende Borkenkäfer abgetötet oder zumindest soweit geschädigt, dass ihnen eine koordinierte Fortbewegung nicht mehr möglich ist.

## Beschreibung

### TECHNISCHES GEBIET DER ERFINDUNG

Die Erfindung bezieht sich auf eine Borkenkäferfalle mit einem Einflugschlitze aufweisenden Gehäuse, einer volatile Lockstoffe in dem Gehäuse freisetzenden Anlockeinrichtung, einer am Boden des Gehäuses angeordneten Größenselektionseinrichtung und einer unterhalb der Größenselektionseinrichtung angeordnete Schädigungseinrichtung. Insbesondere bezieht sich die Erfindung auf eine Borkenkäferfalle mit den Merkmalen des Oberbegriffs des unabhängigen Patentanspruchs 1.

Die Erfindung bezieht sich dabei auf eine Borkenkäferfalle die sowohl für die "Buchdrucker" genannte Art als auch für die "Kupferstecher" genannte, etwas kleinere Art von Borkenkäfern geeignet ist.

Das Fangen und Abtöten von Borkenkäfern mit Borkenkäferfallen ist eine Maßnahme, um den bestandsbedrohenden Befall von Bäumen mit Borkenkäffer soweit zu reduzieren, dass die Gefahr einer Schädigung zumindest grundsätzlich gesunder Bäume durch die Borkenkäfer minimiert ist.

### STAND DER TECHNIK

Eine Borkenkäferfalle mit den Merkmalen des Oberbegriffs des unabhängigen Patentanspruchs 1 ist aus der DE 20 2023 000 706 U1 bekannt. Die Schädigungseinrichtung der bekannten Borkenkäferfalle ist eine Hochspannungstötungseinrichtung. Die Größenselektionseinrichtung weist einen Sortierschlitz auf. Durch den Sortierschlitz hindurch gelangen Borkenkäfer in einen Zählbereich einer Zähleinheit, beispielsweise in Form einer Lichtschranke. Die Lichtschranke ist Teil einer Einrichtung zum Ein- und Abschalten der Hochspannungstötungseinrichtung, wenn Borkenkäfer detektiert werden. Mit der Lichtschranke wird nicht nur die Hochspannungstötungseinrichtung ein- und abgeschaltet, sondern es erfolgt auch eine Zählung der durch den Sortierschlitz hindurchtretenden Borkenkäfer. Die Hochspannungstötungseinrichtung dient zum Abtöten der Borkenkäfer durch Hochspannung. In der Hochspannungstötungseinrichtung wird zum Beispiel eine gepulste Hochspannung zwischen Leiterbahnen angelegt, deren Abstand voneinander so groß ist, dass kein Strom zwischen den Leiterbahnen fließen kann. Gelangt ein Borkenkäfer zwischen die Leiterbahnen oder berührt beide Leiterbahnen verbindet er diese elektrisch durch einen Überschlag, wodurch ein Lichtbogen erzeugt wird, der den Borkenkäfer giftfrei abtötet. Außer nebeneinander liegenden Leiterbahnen können bei der Hochspannungstötungseinrichtung Hochspannungselektroden gegenüberliegend angeordnet sein, an denen eine solche Hochspannung anliegt, dass ein Borkenkäfer bereits beim Hindurchfallen zwischen den Hochspannungselektroden durch den sich ausbildenden Lichtbogen abgetötet wird. In jedem Fall sind die durch einen Lichtbogen abgetöteten Borkenkäfer verkohlt. Durch das Verkohlen werden zum einen Geruchsstoffe freigesetzt, die weitere Borkenkäfer abschrecken können. Zum anderen können die verkohlten Borkenkäfer nicht als Nahrung für Borkenkäfer fressende Borkenkäferantagonisten, die im Folgenden auch "Fressfeinde" genannt werden, dienen. In der bekannten Borkenkäferfalle nimmt ein Auffangbehälter die verkohlten Borkenkäfer auf. Zudem ist der Energiebedarf für ein Abtöten jedes Borkenkäfers durch einen Lichtbogen groß, und durch jeden Lichtbogen wird die Hochspannungstötungseinrichtung erheblich beansprucht, was keine hohe Lebensdauer erwarten lässt.

### AUFGABE DER ERFINDUNG

Der Erfindung liegt die Aufgabe zugrunde, eine effizientere Borkenkäferfalle mit den Merkmalen des Oberbegriffs des unabhängigen Patentanspruchs 1 aufzuzeigen.

### LÖSUNG

Die Aufgabe der Erfindung wird durch eine Borkenkäferfalle mit dem Merkmal des unabhängigen Patentanspruchs 1 gelöst. Die abhängigen Patentansprüche betreffen bevorzugte Ausführungsformen der erfindungsgemäßen Borkenkäferfalle.

### BESCHREIBUNG DER ERFINDUNG

Eine erfindungsgemäße Borkenkäferfalle weist ein Gehäuse mit Einflugschlitzen, eine volatile Lockstoffe in dem Gehäuse freisetzende Anlockeinrichtung, eine am Boden des Gehäuses angeordnete Größenselektionseinrichtung und eine unterhalb der Größenselektionseinrichtung angeordnete Schädigungseinrichtung auf. Die Schädigungseinrichtung umfasst eine Hochspannungselektrode, eine in einem freien Abstand zu der Hochspannungselektrode angeordnete Gegenelektrode und eine eine Hochspannung zwischen der Hochspannungselektrode und der Gegenelektrode anlegende Hochspannungsquelle. Mindestens eine der Hochspannungselektrode und der Gegenelektrode ist mit einer dielektrischen Abschirmung versehen. Die Hochspannungsquelle ändert die zwischen der Hochspannungselektrode und der Gegenelektrode anliegende Hochspannung derart schnell, dass zwischen der Hochspannungselektrode und der Gegenelektrode elektrische Entladungen hervorgerufen werden, die durch dielektrische Abschirmung dielektrisch behindert sind. Zumindest treten die derart dielektrisch behinderten elektrischen Entladungen auf, wenn ein Borkenkäfer in den Bereich des freien Abstands zwischen der Hochspannungselektrode und der Gegenelektrode gelangt. Dann erfolgen die dielektrisch behinderten elektrischen Entladungen über den Borkenkäfer hinweg. In jedem Fall werden Borkenkäfer, die in den Bereich der Hochspannungselektrode und der Gegenelektrode gelangen, durch die elektrischen Entladungen zwischen der Hochspannungselektrode und der Gegenelektrode abgetötet oder zumindest soweit geschädigt, dass ihnen eine koordinierte Fortbewegung nicht mehr möglich ist.

In einer dielektrisch behinderten elektrischen Entladung ist die pro Entladungsfilament eingebrachte elektrische Energie auf Grund der nur für wenige Nanosekunden fließenden Ströme um mindestens einen Faktor 10 kleiner als in einer gepulsten Bogenentladung. Bereits diese kleinen Entladungsenergien reichen aber aus, um Borkenkäfer abzutöten, selbst wenn der Tod der Borkenkäfer nicht zwingend sofort, das heißt während der jeweiligen elektrischen Entladung auftritt, oder zumindest soweit zu schädigen, dass ihnen eine koordinierte Fortbewegung nicht mehr möglich ist, so dass sie keine Bäume mehr schädigen können, selbst wenn sie aus der Korkenkäferfalle heraus gelangen. Zudem kann durch die elektrisch behinderten elektrischen Entladungen zwischen der Hochspannungselektrode und der Gegenelektrode ein kaltes Atmosphärendruckplasma in dem Bereich des freien Abstandes der Elektroden gezündet und aufrecht erhalten werden. In diesem kalten Atmosphärendruckplasma bilden sich reaktive Spezies aus, die wie die elektrischen Entladungen selbst ein hohes letales Potential für die in ihren Bereich gelangenden Borkenkäfer haben. Die erfindungsgemäße Borkenkäferfalle weist jedoch nicht nur eine deutlich höhere Effizienz, das heißt einen niedrigen Verbrauch an elektrischer Energie zum Abtöten oder zumindest substantiellen Schädigen eines Borkenkäfers, und eine längere Lebensdauer als eine Lichtbögen ausbildende Hochspannungstötungseinrichtung auf, sondern auch ein erheblich reduziertes Gefährdungspotential. Insbesondere wenn die Hochspannungselektrode mit der dielektrischen Abschirmung versehen ist, können größere Lebewesen mit der Hochspannungselektrode in Kontakt gelangen, ohne dass damit wegen der Begrenzung der fließenden Ströme ein Verletzungsrisiko verbunden wäre, selbst wenn diese Lebewesen geerdet sind.

Die Hochspannungsquelle der erfindungsgemäßen Schädigungseinrichtung kann ausnutzen, dass die für dielektrisch behinderte elektrische Entladungen erforderliche Spannung mit steigender Geschwindigkeit der Änderung der Hochspannung zwischen der Hochspannungselektrode und der Gegenelektrode sinkt. Wegen der nur kleinen benötigten elektrischen Leistungen ist eine für einen schnellen Spannungsaufbau geneigte Hochspannungsquelle kostengünstig realisierbar.

Bei der erfindungsgemäßen Borkenkäferfalle können die Hochspannungselektrode und die Gegenelektrode parallel zu einander ausgerichtet sein und dabei unter einem kleinen Winkel von typischerweise weniger als 20° und vorzugsweise weniger als 10° zur Vertikalen verlaufen. Die durch die Selektionseinrichtung gelangenden Borkenkäfer können so zwischen der Hochspannungselektrode und der Gegenelektrode nach unten hindurchfallen oder hindurchrutschen und dabei abgetötet oder zumindest substantiell geschädigt werden.

Um ein solches freie Hindurchfallen oder Hindurchrutschen der Borkenkäfer zu realisieren, ohne zugleich eine hohe Spannung für das Hervorrufen der dielektrisch behinderten elektrischen Entladungen erforderlich zu machen, kann der freie Abstand zwischen der Hochspannungselektrode und der Gegenelektrode im Bereich von 2,5 mm bis 10 mm liegen. Vorzugsweise liegt er in einem Bereich von 3 mm bis 6 mm.

Unterhalb der Hochspannungselektrode und der Gegenelektrode kann eine offene Borkenkäferauswurföffnung angeordnet sein. Anders gesagt kann die erfindungsgemäße Borkenkäferfalle eine nach unten offenen Schädigungseinrichtung aufweisen. Auch an der Borkenkäferauswurfsöffnung besteht keine Gefahr von Verletzungen größerer Lebewesen, selbst wenn sie bei laufender Hochspannungsquelle mit der Hochspannungselektrode in Berührung kommen, weil die elektrische Leistung durch die dielektrische Abschirmung stark begrenzt wird. Die nach unten offene Schädigungseinrichtung hat den Vorteil, dass abgetötete oder zumindest substantiell geschädigte Borkenkäfer einfach herausfallen und nicht in der Borkenkäferfalle akkumulieren und dort verwesen. Die typische Wartungsarbeit des Fallenleerens entfällt und es entsteht kein Verwesungsgeruch der wiederum Buchdruckerfeinde zusätzlich in die Falle locken würde. Ein weiterer Vorteil ist, dass die Borkenkäfer durch die Schädigungseinrichtung der erfindungsgemäßen Borkenkäferfalle zwar abgetötet oder zumindest substantiell geschädigt, aber beispielsweise nicht verkohlt werden. Die nur abgetöteten und insbesondere die nur geschädigten Borkenkäfer können ohne Gefahr einer Schädigung von Fressfeinden gefressen werden und diesen als wertvolle Nahrung dienen.

Bei der erfindungsgemäßen Borkenkäferfalle kann auf einer der Gegenelektrode abgekehrten Rückseite der Hochspannungselektrode eine weitere Gegenelektrode in einem weiteren freien Abstand angeordnet sein, wobei die Hochspannungselektrode und/oder die weitere Gegenelektrode mit einer dielektrischen Abschirmung versehen ist, die elektrische Entladungen zwischen der Hochspannungselektrode und der weiteren Gegenelektrode dielektrisch behindert. Vorzugsweise ist die dielektrische Abschirmung auch hier zumindest an der Hochspannungselektrode vorgesehen, um die daran anliegende Hochspannung unmittelbar abzuschirmen. Alternativ kann auf einer der Hochspannungselektrode abgekehrten Rückseite der Gegenelektrode eine weitere Hochspannungselektrode in einem weiteren freien Abstand angeordnet sein, wobei die Gegenelektrode und/oder die weitere Hochspannungselektrode mit einer dielektrischen Abschirmung versehen ist, die elektrische Entladungen zwischen der Gegenelektrode und der weiteren Hochspannungselektrode dielektrisch behindert. Auch diese dielektrische Abschirmung ist vorzugsweise zumindest auf der Hochspannungselektrode angeordnet. Bei beiden voranstehenden Alternativen weist die Schädigungseinrichtung eine zweite Passage von unterhalb der Selektionseinrichtung durch den weiteren freien Abstand auf, die unterhalb der Hochspannungselektrode und der Gegenelektrode an einer weiteren offenen Borkenkäferauswurföffnung enden kann oder an derselben Borkenkäferauswurfsöffnung wie die erste Passage.

Auch wenn das Gefährdungspotential durch die anliegende Hochspannung auf Grund der dielektrischen Abschirmung nur für kleine Lebewesen wie Borkenkäfer gegeben ist, kann die Schädigungseinrichtung der erfindungsgemäßen Borkenkäferfalle mit einer äußeren elektrischen Isolierung eingefasst sein.

Um die Schädigungseinrichtung nur dann zu aktivieren, wenn tatsächlich ein noch nicht abgetöteter oder zumindest substantiell geschädigter Borkenkäfer in den Bereich der Hochspannungselektrode und der Gegenelektrode gelangt, kann zwischen der Größenselektionseinrichtung und der Schädigungseinrichtung eine Lichtschranke angeordnet sein und die Hochspannungsquelle abhängig von einem Signal der Lichtschranke gesteuert sein.

Die Größenselektionseinrichtung der erfindungsgemäßen Borkenkäferfalle ist so auszubilden, dass sie Borkenkäfer, aber nicht deren Fressfeinde zu der Schädigungseinrichtung hindurch lässt. Dafür erweist sich eine maximale Durchlassweite im Bereich von 2,0 mm bis 2,1 mm als sinnvoll. Dies entspricht dem maximalen Durchmesser großer Buchdrucker. Alle Borkenkäfer können entsprechend weite Durchlässe passieren. Ihre Fressfeinde, wie der Ameisenbuntkäfer, jedoch nicht. Besonders effizient erweisen sich eine Lochplatte mit einer Vielzahl von Durchtrittslöchern definierten Durchmessers als Größenselektionseinrichtung der erfindungsgemäßen Borkenkäferfalle. Borkenkäfer nehmen insbesondere kreisrunde Durchtrittslöcher gerne an, weil sie ihrem natürlichen Verhalten entsprechen, sich nach dem Landen möglichst bald in die Rinde eines Baums einzubohren. Buchdrucker werden auch von Schlupfwespen parasitiert. Diese verfolgen aber die Borkenkäfer nicht in die Bohrgänge bzw. in die Lochplatte, d.h. sie müssen nicht durch die Lochplatte größenselektiert werden, um die Borkenkäferfalle fliegend zu verlassen.

Die Anlockeinrichtung der erfindungsgemäßen Borkenkäferfalle kann einen Lockstoffabgabekörper in dem Gehäuse aufweisen, beispielsweise aus einem schwammartigen Material, das mit einer flüssigen Lösung des Lockstoffs getränkt ist. Alternativ oder zusätzlich kann die Anlockeinrichtung ein Fass aufweisen, das Lockstoffe abgebendes Material aufnimmt und das bis auf eine in das Gehäuse einmündende Leitung verschließbar ist. Das die Lockstoffe abgebende Material kann beispielsweise Holz einer solchen Art und in einem solchen Zustand sein, dass es für Borkenkäfer besonders attraktive Lockstoffe abgibt. Die aus dem Holz austretenden Lockstoffe gelangen über die Leitung in das Gehäuse und locken damit die Borkenkäfer in das Gehäuse hinein an. Bei den Lockstoffen, mit denen der schwammartige Lockstoffabgabekörper getränkt ist, kann es sich insbesondere um Pheromone handeln, die Borkenkäfer anlocken. Die Verwendung solcher Pheromone in Borkenkäferfallen ist grundsätzlich bekannt.

Um es Fressfeinden des Borkenkäfers leichter zu machen, wieder aus dem Gehäuse heraus zu gelangen, wenn sie durch die Einflugschlitze hineingelangt sind, kann eine Innenoberfläche des Gehäuses unterhalb der Einflugschlitze aufgeraut und/oder mit Sandpapier belegt sein. Die Fressfeinde des Borkenkäfers können so die Innenoberfläche des Gehäuses hoch klettern und dieses durch die Einflugschlitze wieder verlassen. In das Gehäuse gelangte Borkenkäfer neigen hingegen dazu sich einzubohren, sprich in die Löcher der Lochplatte einzudringen.

Zwischen mehrere sternförmig angeordnete Gehäuseteile des Gehäuses mit am Boden der Gehäuseteile angeordneten Größenselektionsteileinrichtungen der Größenselektionseinrichtung einerseits und die zentral angeordnete Schädigungseinrichtung andererseits kann ein Schacht mit glatten Wänden geschaltet sein, um alle durch die Selektionsteileinrichtungen gelangenden Borkenkäfer der zentralen Schädigungseinrichtung zuzuführen.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine teilweise transparente Vorderansicht einer erfindungsgemäßen Borkenkäferfalle.
- **Fig. 2**: ist eine ebenfalls teilweise transparente Seitenansicht der erfindungsgemäßen Borkenkäferfalle gemäß den Figur 2.
- **Fig. 3**: ist eine perspektivische Ansicht eines Gehäuses der erfindungsgemäßen Borkenkäferfalle gemäß den Figuren 1 und 2, wobei eine Stirnwand des Gehäuses entfernt ist, um den Blick in dessen Innenraum freizugeben; und
- **Fig. 4**: ist ein Schnitt durch das Gehäuse der Borkenkäferfalle gemäß den Figuren 1 bis 3.

### FIGURENBESCHREIBUNG

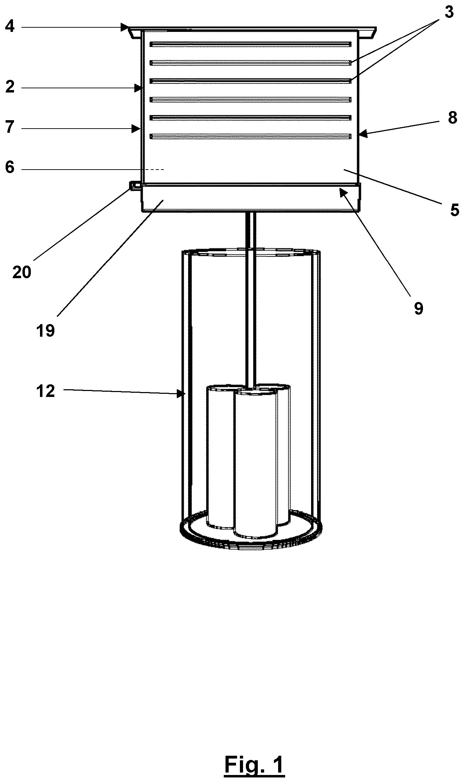

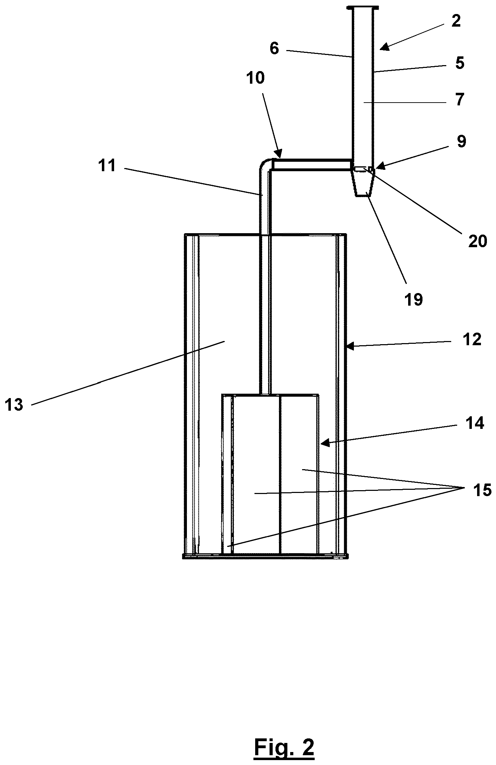

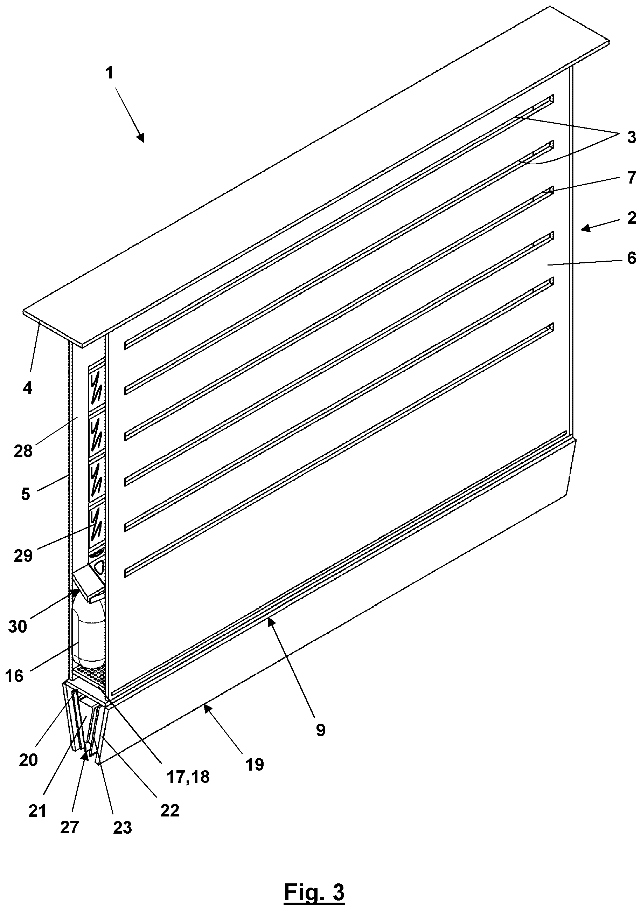

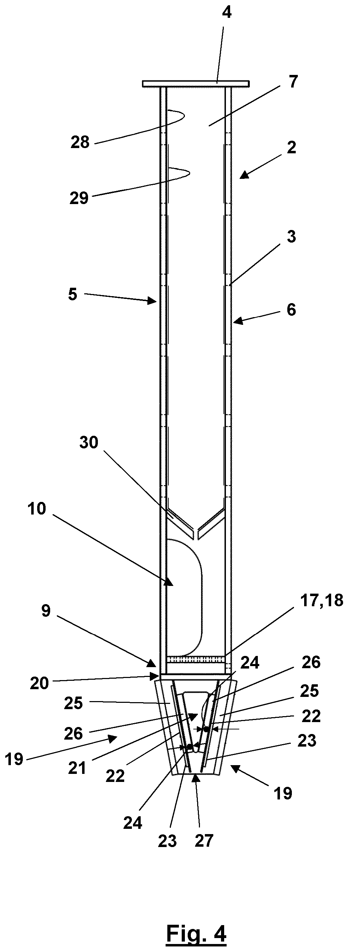

Die in den Figuren 1 und 2 dargestellte Borkenkäferfalle 1 weist ein in den Figuren 3 und 4 separat dargestelltes Gehäuse 2 mit Einflugschlitzen 3 auf. Das Gehäuse 2 weist ein leicht überstehendes Dach 4, Seitenwände 5 und 6, in denen die Einflugschlitze 3 ausgebildet sind sowie geschlossenen Stirnwände 7 und 8 auf. Im Bereich eines Bodens 9 des Gehäuses 2 ist seitlich ein Lockstoffdiffusor 10 angeschlossen. Der Lockstoffdiffusor 10 ist über eine Lockstoffleitung 11 an ein ansonsten hermetisch geschlossenes Fass 12 angeschlossen. Im Inneren 13 des Fasses 12 sind Lockstoffe abgebende Materialien 14, beispielsweise Holzstücke 15 angeordnet, die einen hohen Gehalt an volatilen, Borkenkäfer anlockenden Duftstoffen wie (-)α-Pinen oder (+)-Limonen aufweisen. Die aus diesen Holzstücken 15 freigesetzten volatilen Duftstoffe gelangen durch die Lockstoffleitung 11 und den Lockstoffdiffusor 10 in das Gehäuse 2. Weiterhin ist in dem Gehäuse 2 oberhalb des Bodens 9 und unterhalb eines Fangtrichters 30 ein schwammartiger Lockstoffabgabekörper 16 angeordnet. Der Fangtrichter kann eine derart begrenzte Öffnungsweite aufweisen, dass er als Größenvorselektionseinrichtung für Borkenkäfer dient.

Wie die Figuren 3 und 4 zeigen, ist am Boden 9 des Gehäuses eine Größenselektionseinrichtung 17 in Form einer Lochplatte 18 mit einer Vielzahl von vertikal verlaufenden kreisrunden Durchtrittslöchern eines Durchmessers von 2,1 mm angeordnet. Darunter und über einer Schädigungseinrichtung 19 ist eine Lichtschranke 20 ausgebildet. Die Lichtschranke 20 erkennt, wenn ein Borkenkäfer durch die Größenselektionseinrichtung 17, das heißt ein Durchtrittsloch in der Lochplatte 18, hindurchtritt und so in die Schädigungseinrichtung 19 hinein gelangt. Die Lichtschranke 20 steuert dann eine (nicht dargestellte) Hochspannungsquelle der Schädigungseinrichtung 19 an. An die Hochspannungsquelle sind eine zentrale, hier keilförmige Hochspannungselektrode 21 und jeweils mit einer dielektrischen Abschirmung 22 versehene Gegenelektroden 23 der Schädigungseinrichtung 19 angeschlossen. Die dielektrischen Abschirmungen 22 der in einer V-Konfiguration angeordneten Gegenelektroden liegen dabei in freien Abständen 24 zu der zentralen Hochspannungselektrode 21. Nach außen sind die Gegenelektroden in einer elektrischen Isolierung 25 eingeschlossen. Beim Anlegen einer sich schnell ändernden Hochspannung zwischen der Hochspannungselektrode 21 und den Gegenelektroden 23, die auf Erd- oder Massepotential liegen können, wird im Bereich der freien Abstände 24 ein kaltes Atmosphärendruckplasma 26 gezündet. Das Atmosphärendruckplasma 26 tötet bzw. darin enthaltene reaktive Spezies töten in den Bereich der freien Abstände 24 hineingeratende Borkenkäfer ab oder schädigt/schädigen diese zumindest substantiell. Alternativ oder zusätzlich erfolgen durch die dielektrische Abschirmung 22 der Hochspannungselektrode 21 dielektrisch behinderte elektrische Entladungen zwischen der Hochspannungselektrode 21 und den Gegenelektroden 23 über im Bereich der freien Abstände 24 befindliche Borkenkäfer hinweg. Diese Entladungen haben ebenfalls die gewünschte Borkenkäfer abtötende oder zumindest substantiell schädigende Wirkung. Die schnell variierende Hochspannung zwischen der Hochspannungselektrode 21 und den Gegenelektroden 23, die mit der in den Figuren nicht dargestellten Hochspannungsquelle der Schädigungseinrichtung 19 der Borkenkäferfalle 1 angelegt wird, weist eine typische Amplitude von einigen Kilovolt auf. Die Schädigungseinrichtung 19 endet nach unten mit einer offenen Borkenkäferauswurföffnung 27, durch die hindurch die abgetöteten oder zumindest soweit geschädigten Borkenkäfer, dass ihnen eine koordinierte Fortbewegung nicht mehr möglich ist, aus der Schädigungseinrichtung 19 herausfallen. Unterhalb der Einflugschlitze 3 kann eine Innenoberfläche 28 des Gehäuses 2 aufgeraut oder mit Sandpapier 29 belegt sein, um Fressfeinden der Borkenkäfer einen Wiederaufstieg aus dem Gehäuse 2 durch die Einfluglöcher 3 zu erleichtern.

### BEZUGSZEICHENLISTE

- 1: Borkenkäferfalle
- 2: Gehäuse
- 3: Einflugschlitz
- 4: Dach
- 5: Seitenwand
- 6: Seitenwand
- 7: Stirnwand
- 8: Stirnwand
- 9: Boden
- 10: Lockstoffdiffusor
- 11: Lockstoffleitung
- 12: Fass
- 13: Innenraum
- 14: Material
- 15: Holzstück
- 16: Lockstoffabgabekörper
- 17: Größenselektionseinrichtung
- 18: Lochplatte
- 19: Schädigungseinrichtung
- 20: Lichtschranke
- 21: Hochspannungselektrode
- 22: dielektrische Abschirmung
- 23: Gegenelektrode
- 24: freier Abstand
- 25: Isolierung
- 26: kaltes Atmosphärendruckplasma
- 27: Borkenkäferauswurföffnung
- 28: Innenoberfläche
- 29: Sandpapier
- 30: Fangtrichter

## Patentansprüche

1. Borkenkäferfalle (1) mit
- einem Einflugschlitze (3) aufweisenden Gehäuse (2),
- einer volatile Lockstoffe in dem Gehäuse (2) freisetzenden Anlockeinrichtung,
- einer am Boden (9) des Gehäuses (2) angeordneten Größenselektionseinrichtung (17) und
- einer unterhalb der Größenselektionseinrichtung (17) angeordneten, eine Hochspannungselektrode (21), eine in einem freien Abstand (24) zu der Hochspannungselektrode (21) angeordnete Gegenelektrode (23) und eine eine Hochspannung zwischen der Hochspannungselektrode (21) und der Gegenelektrode (23) anlegenden Hochspannungsquelle aufweisenden Schädigungseinrichtung (19), die in den Bereich des freien Abstands (24) der Hochspannungselektrode (21) und der Gegenelektrode (23) gelangende Borkenkäfer durch elektrische Entladungen zwischen der Hochspannungselektrode (21) und der Gegenelektrode (23) zumindest soweit schädigt, dass ihnen eine koordinierte Fortbewegung nicht mehr möglich ist,
**dadurch gekennzeichnet,**
- **dass** die Hochspannungselektrode (21) und/oder die Gegenelektrode (23) mit einer dielektrischen Abschirmung (22) versehen ist und
- **dass** die Hochspannungsquelle die zwischen der Hochspannungselektrode (21) und der Gegenelektrode (23) anliegende Hochspannung so schnell ändert, dass zwischen der Hochspannungselektrode (21) und der Gegenelektrode (23) durch die dielektrische Abschirmung (22) dielektrisch behinderte elektrische Entladungen hervorgerufen werden.

2. Borkenkäferfalle (1) nach Anspruch 1, **wobei** die Hochspannungsquelle die zwischen der Hochspannungselektrode (21) und der Gegenelektrode (3) anliegende Hochspannung so schnell ändert,
- dass die dielektrisch behinderte elektrische Entladungen über Borkenkäfer hinweg gezündet werden, die sich zwischen der Hochspannungselektrode (21) und der Gegenelektrode (23) befinden, und/oder
- dass zwischen der Hochspannungselektrode (21) und der Gegenelektrode (23) ein kaltes Atmosphärendruckplasma (26) gezündet wird.

3. Borkenkäferfalle (1) nach einem der vorhergehenden Ansprüche, **wobei** die Hochspannungselektrode (21) und die Gegenelektrode (23) parallel zueinander ausgerichtet sind und unter einem Winkel kleiner 20°, vorzugsweise kleiner 10° zur Vertikalen verlaufen.

4. Borkenkäferfalle (1) nach einem der vorhergehenden Ansprüche, **wobei** der freie Abstand (24) zwischen der Hochspannungselektrode (21) und der Gegenelektrode (23) im Bereich von 2,5 mm bis 10 mm, vorzugsweise im Bereich von 3 mm bis 6 mm, liegt.

5. Borkenkäferfalle (1) nach einem der vorhergehenden Ansprüche, **wobei** unterhalb der Hochspannungselektrode (21) und der Gegenelektrode (23) eine offene Borkenkäferauswurföffnung (27) angeordnet ist.

6. Borkenkäferfalle (1) nach einem der vorhergehenden Ansprüche, **wobei**
- auf einer der Gegenelektrode (23) abgekehrten Rückseite der Hochspannungselektrode (21) eine weitere Gegenelektrode (23) in einem weiteren freien Abstand (24) angeordnet ist, wobei die Hochspannungselektrode (21) und/oder die weitere Gegenelektrode (23) mit einer weiteren dielektrischen Abschirmung (22) versehen ist, die elektrische Entladungen zwischen der Hochspannungselektrode (21) und der weiteren Gegenelektrode (23) dielektrisch behindert, oder
- auf einer der Hochspannungselektrode (21) abgekehrten Rückseite der Gegenelektrode (23) eine weitere Hochspannungselektrode (21) in einem weiteren freien Abstand (24) angeordnet ist, wobei die Gegenelektrode (23) und/oder die weitere Hochspannungselektrode (21) mit einer weiteren dielektrischen Abschirmung (22) versehen ist, die elektrische Entladungen zwischen der Gegenelektrode (23) und der weiteren Hochspannungselektrode (21) dielektrisch behindert.

7. Borkenkäferfalle (1) nach einem der vorhergehenden Ansprüche, **wobei** die Schädigungseinrichtung (19) mit einer äußeren elektrischen Isolierung (25) eingefasst ist.

8. Borkenkäferfalle (1) nach einem der vorhergehenden Ansprüche, **wobei** zwischen der Größenselektionseinrichtung (17) und der Schädigungseinrichtung (19) eine Lichtschranke (20) angeordnet ist und wobei die Hochspannungsquelle abhängig von einem Signal der Lichtschranke (20) gesteuert ist.

9. Borkenkäferfalle (1) nach einem der vorhergehenden Ansprüche, **wobei** die Größenselektionseinrichtung (17)
- eine maximale Durchlassweite im Bereich von 2,0 mm bis 2,1 mm und/oder
- eine Lochplatte (18) mit einer Vielzahl von Durchtrittslöchern
aufweist.

10. Borkenkäferfalle (1) nach einem der vorhergehenden Ansprüche, **wobei** die Anlockeinrichtung
- eine Lockstoffabgabekörper (16) in dem Gehäuse (2) und/oder
- ein Fass (12), das Lockstoffe abgebendes Material (14) aufnimmt und das bis auf eine in das Gehäuse (2) einmündende Lockstoffleitung (11) verschließbar ist,
aufweist.

11. Borkenkäferfalle (1) nach einem der vorhergehenden Ansprüche, **wobei** eine Innenoberfläche (28) des Gehäuses (2) unterhalb der Einflugschlitze (3) aufgeraut ist und/oder mit Sandpapier (29) belegt ist.

12. Borkenkäferfalle (1) nach einem der vorhergehenden Ansprüche, **wobei** zwischen mehrere sternförmig angeordnete Gehäuseteile mit am Boden (9) der Gehäuseteile angeordneten Größenselektionsteileinrichtungen und die Schädigungseinrichtung ein Schacht mit glatten Wänden geschaltet ist.
